(19) Europäisches Patentamt
European Patent Office
Office européen des brevets

(11) Veröffentlichungsnummer : **0 063 268**
**B1**

(12) **EUROPÄISCHE PATENTSCHRIFT**

(45) Veröffentlichungstag der Patentschrift : **19.12.84**

(51) Int. Cl.$^3$ : **C 08 L 83/04**

(21) Anmeldenummer : **82102716.6**

(22) Anmeldetag : **31.03.82**

(54) **Unter Wasserausschluss lagerfähige plastische Organopolysiloxan-Formmassen.**

(30) Priorität : **11.04.81 DE 3114773**

(43) Veröffentlichungstag der Anmeldung : **27.10.82 Patentblatt 82/43**

(45) Bekanntmachung des Hinweises auf die Patenterteilung : **19.12.84 Patentblatt 84/51**

(84) Benannte Vertragsstaaten : **AT BE DE FR GB IT NL**

(56) Entgegenhaltungen :
**DE-A- 1 694 209**
**FR-A- 1 594 476**

(73) Patentinhaber : **BAYER AG**
**Konzernverwaltung RP Patentabteilung**
**D-5090 Leverkusen 1 Bayerwerk (DE)**

(72) Erfinder : **Sattlegger, Hans, Dr.**
**Auf dem Heldchen 9**
**D-5068 Odenthal (DE)**
Erfinder : **Schnurrbusch, Karl, Dr.**
**Kurt-Schumacher-Ring 154**
**D-5090 Leverkusen 1 (DE)**
Erfinder : **Metzinger, Hans-Gerd, Dr.**
**Morsbroicher Strasse 67**
**D-5090 Leverkusen 1 (DE)**

**EP 0 063 268 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft plastisch verformbare Gemische von Organopolysiloxanen mit neuen Vernetzungsmitteln, die bei Temperaturen unterhalb 50 °C in Anwesenheit von Wasser oder Wasserdampf in einen gummielastischen Zustand übergehen.

Derartige Gemische — auch RTV-Einkomponenten-Massen genannt — finden vornehmlich Verwendung als Fugen- und Dichtungsmassen im Bauwesen, bei sanitären Anlagen, im Aquarienbau und in der Industrie. Sie enthalten alle als Grundbestandteil ein gegebenenfalls mit Füllstoff vermischtes α,ω-Dihydroxypolydiorganosiloxan. Mischt man dies mit einer Siliciumverbindung, die mehr als zwei reaktive Gruppen enthält, welche sowohl mit Silanolgruppen als auch mit Wasser reagieren können, und schließt man dabei den Zutritt von Feuchtigkeit aus, so ergeben sich lagerbeständige Reaktionsgemische, die bei Zutritt atomosphärischer Luft durch deren Wasserdampfgehalt in ein elastomeres Vernetzungsprodukt umgewandelt werden. Derartige RTV-Einkomponentensysteme sind an sich seit langem bekannt (vgl. z. B. W. Noll, Chemie und Technologie der Silicone 1968, Seite 341).

Die heute marktüblichen Massen haben den Nachteil, daß sie bei der Vernetzung mit Feuchtigkeit Essigsäure, Amine oder Oxime abspalten und dadurch, besonders bei der Verarbeitung in geschlossenen Räumen, zu einer erheblichen Geruchsbelästigung führen können.

Aus der DE-A-1 694 209 sind Organopolysiloxanmassen bekannt, die als Vernetzungsmittel stickstoffhaltige Siliciumverbindungen mit der charakteristischen —Si—C—N-Gruppierung enthalten. Derartige Substanzen bringen zwar eine erhebliche Verbesserung hinsichtlich des Geruchsverhaltens, doch läßt sich auch damit eine Abspaltung von Aminen nicht völlig verhindern.

Es war daher Aufgabe der vorliegenden Erfindung, Organopolysiloxanmassen — in Form eines üblichen Einkomponenten-Systems — zur Verfügung zu stellen, das die erwähnten Nachteile nicht besitzt und das darüber hinaus geeignet ist, transparente, geruchsneutrale Massen zu ergeben, die sowohl lagerstabil sind als auch eine gute Haftung auf den Untergründen zeigen.

Gegenstand der vorliegenden Erfindung sind daher unter Ausschluß von Wasser lagerfähige plastische Organopolysiloxan-Formmassen, die sich unter Einwirkung von Wasser oder atmosphärischer Feuchtigkeit bereits bei Raumtemperatur in gummielastische Formkörper oder Überzüge umwandeln, erhältlich durch Mischen von Hydroxy-endgestoppten Polydiorganosiloxanen als Vernetzungsmitteln dienenden Siliciumverbindungen und gegebenenfalls mit α,ω-Bis-trimethylsiloxypolydimethylsiloxan-Haftvermittlern, Lösungsmitteln, Füllstoffen, Pigmenten und mit bekanntermaßen die Vernetzung beschleunigenden Schwermetallsalzen oder Aminen, die dadurch gekennzeichnet sind, daß das Gemisch 0,1 bis 15 Gew.-% — bezogen auf die Gesamtmischung — als Vernetzer folgende Substanzen oder deren Teilhydrolysate enthält:

$$R_W(RO)_ZSi[NR'''R'R_nSi(OR)_{3-n}]_{4-m}$$

wobei

R ein Alkylrest mit 1-4 C-Atomen wie $CH_3$—, $C_2H_5$—,

R' ein Alkylenrest mit 1-6 C-Atomen bevorzugt —$(CH_2)_3$— oder aber Einheiten der Formel —$(CH_2)_3NH(CH_2)_2$— oder —$(CH_2)_3NH(CH_2)_2NH(CH_2)_2$—

R''' ein Alkylrest mit 1-4 C-Atomen oder H sein kann,

n = 0, 1, 2

m = W + Z = 0, 1, 2, 3 (für m = 1 ist W oder Z = 1); (für m = 0 ist W und Z = 0)

wobei vorzugsweise als RO $C_2H_5O$— zum Einsatz kommt. Der Gehalt des Vernetzers liegt zwischen 0,1 und 15 %, vorzugsweise 3-8 Gew.-%. Der erfindungsgemäße Effekt wird nicht beeinflußt, ob diese Substanz als solche zum Einsatz kommt oder *in situ* durch z. B. folgende Reaktion entsteht:

$$\underset{(1)}{R_WRO_ZSiR''_{4-m}} + \underset{(2)}{mH_2NR'R_nSi(OR)_{3-n}} \rightarrow R_WRO_ZSiNR'''R'R_nSi(OR)_{3-n\ 4-m} + mHR''$$

Dabei kann in der endgültig zum Einsatz kommenden Masse sehr wohl ein Überschuß sowohl von (1) oder von (2) vorliegen, falls z. B. R'' ein Substituent ist, der die — falls gewünschte Transparenz der erfindungsgemäßen Substanz nicht beeinflußt, wie z. B. R'' = Propionsäureamid oder Caprolactam.

Die erfindungsgemäß eingesetzten Substanzen werden aus dem Aminoalkylalkoxysilan durch Reaktion mit einem reaktiven Alkyl-alkoxychlorsilan oder einem anderen reaktiven Silan hergestellt. Die Reaktion läuft dabei z. B. wie im Falle der Umsetzung Methylalkoxydi-N-methylpropionamidosilan mit γ-Aminopropyltrialkoxysilan bei Raumtemperatur spontan ab oder braucht wie im Falle der Reaktion von Methylalkoxydi-N-methylpropionamidosilan mit γ-N-Methylaminopropyltrialkoxysilan sowohl Zeit als auch Temperatureinwirkung (z. B. 10 Stunden bei 100°). Entsprechend dem Formelbild auf Seite 3 konnten u. a. folgende erfindungsgemäß wirkende Substanzen hergestellt und entsprechend den Beispielen zu einkomponentigen Massen verarbeitet werden. In der folgenden Aufstellung sind einige dieser Substanzen zusammengefaßt:

$CH_3Si[NH(CH_2)_3Si(OCH_3)_3]_3$
$CH_3Si[NH(CH_2)_2NH(CH_2)_3Si(OCH_3)_3]_3$
$CH_3Si[NH(CH_2)_2NH(CH_2)_2NH(CH_2)_3Si(OCH_3)_3]_3$

$CH_3(CH_3O)Si[NH(CH_2)_3Si(OCH_3)_3]_2$
$CH_3(CH_3O)Si[NH(CH_2)_2NH(CH_2)_3Si(OCH_3)_3]_2$
$CH_3(CH_3O)Si[NH(CH_2)_2NH(CH_2)_2NH(CH_2)_3Si(OCH_3)_3]_2$

$CH_3Si[NH(CH_2)_3Si(OC_2H_5)_3]_3$
$CH_3Si[NH(CH_2)_2NH(CH_2)_3Si(OC_2H_5)_3]_3$
$CH_3Si[NH(CH_2)_2NH(CH_2)_2NH(CH_2)_3Si(OC_2H_5)_3]_3$

$CH_3(CH_3O)Si[NH(CH_2)_3Si(OC_2H_5)_3]_2$
$CH_3(CH_3O)Si[NH(CH_2)_2NH(CH_2)_3(OC_2H_5)_3]_2$
$CH_3(CH_3O)Si[NH(CH_2)_2NH(CH_2)_2NH(CH_2)_3Si(OC_2H_5)_3]_2$

$CH_3(C_2H_5O)Si[NH(CH_2)_3Si(OC_2H_5)_3]_2$
$CH_3(C_2H_5O)Si[NH(CH_2)_2NH(CH_2)_3Si(OC_2H_5)_3]_2$
$CH_3(C_2H_5O)Si[NH(CH_2)_2NH(CH_2)_2NH(CH_2)_3Si(OC_2H_5)_3]_2$

$CH_3(C_3H_7O)Si[NH(CH_2)_3Si(OCH_3)_3]_2$
$CH_3(C_3H_7O)Si[NH(CH_2)_2NH(CH_2)_3Si(OCH_3)_3]_2$
$CH_3(C_3H_7O)Si[NH(CH_2)_2NH(CH_2)_2NH(CH_2)_3Si(OCH_3)_3]_2$

$CH_3(C_2H_5O)Si[NH(CH_2)_3Si(OCH_3)_3]_2$
$CH_3(C_2H_5O)Si[NH(CH_2)_2NH(CH_2)_3Si(OCH_3)_3]_2$
$CH_3(C_2H_5O)Si[NH(CH_2)_2NH(CH_2)_2NH(CH_2)_3Si(OCH_3)_3]_2$

$CH_3(CH_3O)_2Si[NH(CH_2)_3Si(OCH_3)_3]$
$CH_3(CH_3O)_2Si[NH(CH_2)_2NH(CH_2)_3Si(OCH_3)_3]$
$CH_3(CH_3O)_2Si[NH(CH_2)_2NH(CH_2)_2NH(CH_2)_3Si(OCH_3)_3]$

$(CH_3O)(CH_3)_2Si[NH(CH_2)_3Si(OCH_3)_3]$
$(CH_3O)(CH_3)_2Si[NH(CH_2)_2NH(CH_2)_3Si(OCH_3)_3]$
$(CH_3O)(CH_3)_2Si[NH(CH_2)_2NH(CH_2)_2NH(CH_2)_3Si(OCH_3)_3]$

$CH_3[(CH_3)_2CHO]_2Si[NH(CH_2)_3Si(OC_2H_5)_3]$
$CH_3[(CH_3)_2CHO]_2Si[NH(CH_2)_2NH(CH_2)_3Si(OC_2H_5)_3]$
$CH_3[(CH_3)_2CHO]_2Si[NH(CH_2)_2NH(CH_2)_2NH(CH_2)_3Si(OC_2H_5)_3]$

$CH_3(C_3H_7O)Si[NH(CH_2)_3Si(OC_2H_5)_3]_2$
$CH_3(C_3H_7O)Si[NH(CH_2)_2NH(CH_2)_3Si(OC_2H_5)_3]_2$
$CH_3(C_3H_7O)Si[NH(CH_2)_2Si(CH_2)_2NH(CH_2)_3Si(OC_2H_5)_3]_2$

$CH_3(C_2H_5O)_2Si[NH(CH_2)_3Si(OCH_3)_3]$
$CH_3(C_2H_5O)_2Si[NH(CH_2)_2NH(CH_2)_3Si(OCH_3)_3]$
$CH_3(C_2H_5O)_2Si[NH(CH_2)_3Si(OC_2H_5)_3]$

$CH_3(C_2H_5O)Si[NCH_3(CH_2)_3Si(OCH_3)_3]_2$
$CH_3(C_2H_5O)Si[NCH_3(CH_2)_3Si(OC_2H_5)_3]_2$
$CH_3(CH_3O)Si[NCH_3(CH_2)_3Si(OCH_3)_3]_2$

$(CH_3)_2Si[NH(CH_2)_3Si(OCH_3)_3]_2$
$(CH_3)_2Si[NH(CH_2)_2NH(CH_2)_3Si(OCH_3)_3]_2$
$(CH_3)_2Si[NH(CH_2)_2NH(CH_2)_2NH(CH_2)_3Si(OCH_3)_3]_2$

$(CH_3)_2Si[NH(CH_2)_3Si(OC_2H_5)_3]_2$
$(CH_3)_2Si[NH(CH_2)_2NH(CH_2)_3Si(OC_2H_5)_3]_2$
$(CH_3)_2Si[NH(CH_2)_2NH(CH_2)_2NH(CH_2)_3Si(OC_2H_5)_3]_2$

Die Mengenverhältnisse der Mischungskomponenten sind analog denen der bekannten Massen. Bevorzugt ist ein Gemisch, das auf 100 Gewichtsteile $\alpha,\omega$-Dihydroxypolydiorganosiloxan von 500 bis 500 000 mPa · s, insbesondere 10 000 bis 60 000 mPa · s Viskosität bei 20 °C, 10 bis 150 Gewichtsteile eines Füllstoffes, 0,1 bis 15 Gewichtsteile des Vernetzungsmittels oder gegebenenfalls eines Vernetzungsmittelgemisches, das mindestens 1 % des oben definierten Vernetzers enthält, und gegebenenfalls 0,1 bis 3,0 Gew.-Teile einer Schwermetallverbindung als Katalysator enthält.

Als Mischungskomponenten können gegebenenfalls noch mitverwendet werden : Haftvermittler wie z. B. Alkoxysilane, Aminoalkylalkoxysilane oder Verbindungen des Typs $R_3SiO$ $[SiR_2O]_n$—$SiR_3$ (R = Alkylrest mit 1-4 C-Atomen, n = 0-10), Lösungsmittel sowohl aromatischer als auch aliphatischer, geradkettiger und verzweigter Natur.

Als Füllstoffe werden verstärkend wirkende, wie kolloiddisperse Kieselsäure, bevorzugt, doch lassen sich dazu auch gering verstärkende verwenden, wie Quarzmehl, Diatomeenerde oder Zinkoxid und Kreide. Außerdem ist es möglich, derartige Füllstoffe vor dem Einsatz, während oder nach der Einarbeitung zu beladen.

Die erfindungsgemäßen Einkomponenten-Systeme eignen sich prinzipiell für alle Verwendungszwecke. Besonders bevorzugt werden derartige Systeme bei Verfugungen in geschlossenen Räumen und im Do-it-yourself-Sektor.

Die Herstellung der erfindungsgemäßen Formmassen aus ihren Mischungskomponenten erfolgt in bekannter Weise, wobei man gewöhnlich zunächst die weitgehend wasserfreien, nicht vernetzend wirkenden Komponenten zusammenmischt, danach das Vernetzungsmittel beimengt und schließlich das Gesamtgemisch bei Raumtemperatur entgast.

Der Gegenstand der vorliegenden Erfindung soll anhand der folgenden Beispiele noch näher erläutert werden.

## Beispiel 1

Es wird eine Mischung aus 60 Gew.-Tle α,ω-Dihydroxypolydimethylsiloxan und 20 Gew.-Tle α,ω-Bistrimethylsiloxy-polydimethylsiloxan vorgelegt. Dazu werden bei Raumtemperatur 4 Gew.-Tle eines Methylethoxy-digammaaminopropyltriethoxysilyl-silans gegeben und kurz gerührt. Nun werden 8 Gew.-Tle einer feindispersen Kiselsäure zugegeben und bis zur Homogenität unter Vakuum gerührt. Zum Schluß werden 0,4 Gew.-Tle Dibutylzinndiacetat direkt oder in einem Lösungsmittel gelöst (Dioxan) zugegeben und ca. 10 min unter Vakuum homogen eingerührt. Nun wird die Masse in Kartuschen oder Tuben abgefüllt und kann ohne Feuchtigkeiszutritt mindestens 1/2 Jahr gelagert werden, ohne daß die Vulkanisationsfähigkeit oder die Haftung bei einer späteren Anwendung beeinträchtigt wird.

Die erfindungsgemäße Maßnahme führte dazu, daß dieses Produkt in bezug auf Geruch, Mechanik, Verarbeitung und Haftung eine wesentliche Verbesserung darstellt, und zwar insbesondere hinsichtlich des Geruches und damit verbunden der Verarbeitbarkeit des Materials (keine Belästigung durch Essigsäure oder Amin).

Die erfindungsgemäße Maßnahme führte auch zu einer sehr guten Haftung ohne Voranstrich auf verschiedenen Metallen, Kunststoffen und Holz.

Sogar nach Wasserlagerung war z. B. auf Aluminium, Eloxal, Eisen, Zinn und Kupfer eine gute Haftung ohne Voranstrich feststellbar. Auf Acrylglas, Polycarbonat und PVC wurde ebenfalls eine gute Haftung erreicht.

## Beispiel 2

Es wird eine Mischung aus 60 Gew.-Tle α,ω-Dihydroxypolydimethylsiloxan und 20 Gew.-Tle α,ω-Bistrimethylsiloxy-polydimethylsiloxan vorgelegt. Dazu werden bei Raumtemperatur 3 Gew.-Tle Methylethoxy-di-n-propionamidosilan und 3 Gew.-Tle γ-Amino-propyltriethoxysilan gegeben und kurz gerührt. Nun werden 10 Gew.-Tle einer feindispersen Kielselsäure zugegeben und bis zur Homogenität gerührt. Zum Schluß werden 0,3 Gew.-Tle Dibutylzinndiacetat direkt oder in einem Lösungsmittel gelöst (Toluol) zugegeben und ca. 10 Minuten unter Vakuum homogen eingerührt. Nun wird die Masse in Kartuschen oder Tuben abgefüllt und kann ohne Feuchtigkeitszutritt über mehrere Monate (bei entsprechend trockener Kieselsäure, weit über 1/2 Jahr) gelagert werden, ohne daß die Vulkanisationsfähigkeit oder die Haftung bei einer späteren Anwendung beeinträchtigt werden.

Das Produkt, das transparent ist, härtet an Luft schnell gut und gleichmäßig durch und gibt dabei erfindungsgemäß keine irgendwie stark riechenden Gase ab. Nach der Aushärtung zeigt es ohne Voranstrich hervorragende Haftung auch nach Wasserlagerung auf z. B. Aluminium, Eloxal, Eisen, Zinn, Kupfer, vielen Kunststoffen — wie Acrylglas, PVC und Polycarbonat — und Naturstoffen wie Holz. Es zeigt ähnliche Eigenschaften wie das unter Beispiel 1 hergestellte Produkt.

## Beispiel 3

Es wird eine Mischung aus 60 Gew.-Tle α,ω-Dihydroxypolydimethylsiloxan und 20 Gew.-Tle α,ω-Bistrimethylsiloxy-polydimethylsiloxan vorgelegt. Dazu wird eine 24 Stunden bei 80 °C unter Ausschluß von Feuchtigkeit gelagerte Mischung von 2,5 Gew.-Tle Methylethoxy-di-N-caprolactamsilan und 2,5 Gew.-Tle γ-Amino-Propyltriethoxysilan gegeben und kurz gerührt. Nun werden 10 Gew.-Tle einer feindispersen Kieselsäure zugegeben und bis zur Homogenität gerührt. Zum Schluß werden 0,3 Gew.-Tle Dibutylzinndiacetat direkt oder in einem Lösungsmittel gelöst (Xylol) zugegeben und ca. 10 min unter Vakuum homogen eingerührt.

Das Produkt zeigt ähnlich gute Eigenschaften wie das unter Beispiel 1 und 2 erhaltene.

Beispiel 4

Es wird eine Mischung auf 60 Gew.-Tle α,ω-Dihydroxypolydimethylsiloxan und 20 Gew.-Tle α,ω-Bistrimethylsiloxy-polydimethylsiloxan vorgelegt. Dazu wird eine 24 Stunden bei 80 °C unter Ausschluß von Feuchtigkeit gelagerte Mischung von 3 Gew.-Tle Diethylentriamino-γ-N-propyltrimethoxysilan und 3 Gew.-Tle Methylethoxy-di-N-propionamidosilan gegeben und kurz gerührt. Vorher wurde durch eine kernresonanzspektroskopische Untersuchung bestätigt, daß die erfindungsgemäße Substanz entstanden ist, die nachfolgende Formel hat :

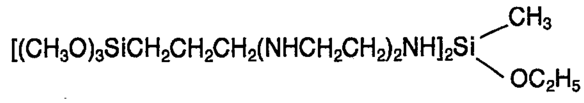

Nun werden 10 Gew.-Tle einer feindispersen Kieselsäure zugegeben und bis zur Homogenität gerührt. Zum Schluß werden 0,3 Gew.-Tle Dibutylzinndiacetat direkt oder in einem Lösungsmittel gelöst (Toluol) zugegeben und ca. 10 min unter Vakuum homogen eingerührt. Nun wird die Masse in Kartuschen oder Tuben abgefüllt und kann ohne Feuchtigkeitszutritt über mehrere Monate gelagert werden, ohne daß die Vulkanisationsfähigkeit oder die Haftung bei einer späteren Anwendung beeinträchtigt werden. Das Produkt zeigt ähnlich positive Eigenschaften wie das unter Beispiel 1 und 2 hergestellte Produkt.

Beispiel 5

Es wird eine Mischung aus 61 Gew.-Tlen α,ω-Dihydroxypolydimethylsiloxan und 20 Gew.-Tlen α,ω-Bis-trimethylsiloxy-polydimethylsiloxan vorgelegt. Dazu werden bei Raumtemperatur 0,5 Tle Hexamethyldisiloxan, 2 Gew.-Tle Isoeikosan und 5 Gew.-Tle eines Methylethoxy-digammaaminopropyltriethoxy-silans gegeben und kurz gerührt. Nun werden 10 Gew.-Tle einer feindispersen Kieselsäure zugegeben und bis zur Homogenität unter Vakuum gerührt. Zum Schluß werden 0,3 Gew.-Tle eines Katalysators (Dibutylzinndiacetat) in einem Lösungsmittel gelöst (Toluol) zugegeben und ca. 10 min unter Vakuum homogen eingerührt. Nun wird die Masse in Kartuschen oder Tuben abgefüllt und kann ohne Feuchtigkeitszutritt mindestens 1/2 Jahr gelagert werden, ohne daß die Vulkanisationsfähigkeit oder die Haftung bei einer späteren Anwendung beeinträchtigt wird.

Die erfindungsgemäße Maßnahme führte dazu, daß dieses Produkt in bezug auf Geruch, Mechanik, Verarbeitung und Haftung eine wesentliche Verbesserung darstellt, und zwar insbesondere hinsichtlich des Geruches und damit verbunden der Verarbeitbarkeit des Materials (keine Belästigung durch Essigsäure oder Amin).

Die erfindungsgemäße Maßnahme führte auch zu einer sehr guten Haftung ohne Voranstrich auf verschiedenen Metallen, Kunststoffen und Holz.

Sogar nach Wasserlagerung war z. B. auf Aluminium, Eloxal, Eisen, Zinn und Kupfer eine gute Haftung ohne Voranstrich feststellbar. Auch auf Acrylglas, Polycarbonat und PVC wurde ebenfalls eine gute Haftung erreicht.

Beispiel 6

Es wird eine Mischung aus 60 Gew.-Tle α,ω-Dihydroxypolydimethylsiloxan und 20 Gew.-Tle α,ω-Bistrimethylsiloxy-polydimethylsiloxan vorgelegt. Dazu wird eine 24 Stunden bei 80 °C unter Ausschluß von Feuchtigkeit gelagerte Mischung von 3,5 Gew.-Tle 2-Aminoethyl-γ-aminopropyltrimethoxysilan und 4 Gew.-Tle Methylethoxy-di-N-propionamidosilan gegeben und kurz gerührt. Nun werden 10 Gew.-Tle einer feindispersen Kieselsäure zugegeben und bis zur Homogenität gerührt. Zum Schluß werden 0,3 Gew.-Tle Dibutylzinndiacetat direkt oder in einem Lösungsmittel gelöst (Xylol) zugegeben und ca. 10 min unter Vakuum homogen eingerührt. Nun wird die Masse in Kartuschen oder Tuben abgefüllt und kann ohne Feuchtigkeitszutritt über mehrere Monate gelagert werden, ohne daß die Vulkanisationsfähigkeit oder die Haftung bei einer späteren Anwendung beeinträchtigt wird.

Das Produkt zeigt ähnlich gute Eigenschaften wie das unter Beispiel 1 und 2 erhaltene.

Beispiel 7

Es wird eine Mischung aus 60 Gew.-Tle α,ω-Dihydroxypolydimethylsiloxan und 20 Gew.-Tle α,ω-Bistrimethylsiloxy-polydimethylsiloxan vorgelegt. Dazu werden bei Raumtemperatur 0,5 Gew.-Tle eines Methyl-ethoxydipropionamid-Silans gegeben und kurz gerührt. Dazu werden weiter bei Raumtemperatur 4 Gew.-Tle eines Methylethoxydigammaaminopropyltriethoxysilyl-silans gegeben und wieder kurz gerührt. Nun werden 8 Gew-Tle einer feindispersen Kieselsäure zugegeben und bis zur Homogenität unter Vakuum gerührt. Zum Schluß werden 0,4 Gew.-Tle Dibutylzinndiacetat direkt oder in einem Lösungsmittel gelöst (Dioxan) zugegeben und ca. 10 min unter Vakuum homogen eingerührt. Nun wird die Masse in Kartuschen oder Tuben abgefüllt und kann ohne Feuchtigkeitszutritt mindestens 1/2 Jahr gelagert

werden, ohne daß die Vulkanisationsfähigkeit oder die Haftung bei einer späteren Anwendung beeinträchtigt wird.

Die erfindungsgemäße Maßnahme führt in bezug auf Geruch, Mechanik, Verarbeitung, Vernetzung und Haftung zu einem ausgezeichnetem Produkt das auch eine sehr gute Haftung ohne Voranstrich auf verschiedenen Metallen, Kunststoffen und Holz zeigt. Sogar nach Wasserlagerung war z. B. auf Aluminium, Eloxal, Eisen, Zinn und Kupfer eine gute Haftung ohne Voranstrich feststellbar. Auf Acrylglas, Polycarbonat und PVC wurde ebenfalls eine gute Haftung errreicht.

**Ansprüche**

1. Unter Ausschluß von Wasser lagerfähige plastische Organopolysiloxanmassen, die sich unter Einwirkung von Wasser oder atmosphärischer Feuchtigkeit bereits bei Raumtemperatur in gummielastische Massen umwandeln, erhältlich durch Mischen von hydroxyendgestoppten Polydiorganosiloxanen mit als Vernetzungsmittel dienenden Siliciumverbindungen und, gegebenenfalls mit α,ω-Bis-trimethylsiloxypolydimethylsiloxan, Haftvermittlern, Lösungsmitteln, Füllstoffen, Pigmenten und mit bekanntermaßen die Vernetzung beschleunigenden Schwermetallsalzen oder Aminen, dadurch gekennzeichnet, daß als Vernetzungsmittel 0,1-15 Gew.-% — bezogen auf die Gesamtmischung — einer Substanz der allgemeinen Formel

$$R_W(RO)_zSi[NR'''R'R_nSi(OR)_{3-n}]_{4-m}$$

wobei

R ein Alkylrest mit 1-4 C-Atomen,

R' ein Alkylenrest mit 1-6 C-Atomen oder aber Einheiten der Formel $-(CH_2)_3NH(CH_2)_2-$ oder $-(CH_2)_2-NH(CH_2)_2NH(CH_2)_2$,

R''' Alkylrest mit 1-4 C-Atomen oder Wasserstoff,

n 0, 1 oder 2,

m W + Z bedeutet wobei diese Summe 0, 1, 2 oder 3 betragen kann,

oder deren Teilhydrolysate eingesetzt wird.

2. Formmassen gemäß Anspruch 1, dadurch gekennzeichnet, daß RO für die Gruppe $C_2H_5O-$ steht.

3. Formmassen gemäß Anspruch 1, dadurch gekennzeichnet, daß als Vernetzungsmittel

$$CH_3(C_2H_5O)Si[NHCH_2CH_2CH_2Si(OC_2H_5)_3]_2$$

eingesetzt wird.

4. Formmassen gemäß Anspruch 1, dadurch gekennzeichnet, daß zusätzlich zu dem Vernetzungsmittel gemäß Anspruch 1 eine weitere als Vernetzungsmittel wirkende Substanz eingesetzt wird.

**Claims**

1. Plastic organopolysiloxane compositions which can be stored in the absence of water, which are already converted at room temperature into rubber-elastic compositions by the action of water or atmospheric moisture, and which are obtainable by mixing hydroxyl-terminated polydiorganosiloxanes with silicon compounds acting as crosslinking agents and, optionally, with α,ω-bis-trimethylsiloxypolydimethylsiloxane, adhesion-promoters, solvents, fillers and pigments and with heavy metal salts or amines known to accelerate crosslinking, characterised in that as crosslinking agent 0.1-15 % by weight — based on the total mixture — of a substance of the general formula

$$R_W(RO)_ZSi[NR'''R'R_nSi(OR)_{3-n}]_{4-m}$$

wherein

R denotes an alkyl radical with 1-4 C atoms,

R' denotes an alkylene radical with 1-6 C atoms or otherwise units of the formula $-(CH_2)_3NH(CH_2)_2-$ or $-(CH_2)_2-NH(CH_2)_2NH(CH_2)_2$,

R''' denotes an alkyl radical with 1-4 C atoms or hydrogen,

n denotes 0, 1 or 2, and

m denotes W + Z, it being possible for this sum to be 0, 1, 2, or 3,

or partial hydrolysis products thereof, are used.

2. Moulding compositions according to Claim 1, characterised in that RO represents the group $C_2H_5O-$.

3. Moulding compositions according to Claim 1, characterised in that

$$CH_3(C_2H_5O)Si[NHCH_2CH_2CH_2Si(OC_2H_5)_3]_2$$

is used as the crosslinking agent.

4. Moulding compositions according to Claim 1, characterised in that a further substance acting as a crosslinking agent is used in addition to the crooslinking agent according to Claim 1.

**Revendications**

1. Masses d'organopolysiloxanes plastiques, entreposables à l'abri de l'eau, qui se transforment sous l'action de l'eau ou de l'humidité atmosphérique déjà à la température ordinaire en des masses caoutchouteuses élastiques, obtenables par mélange de polydiorganosiloxanes à hydroxyles terminaux avec des composés de silicium servant d'agents de réticulation et, éventuellement, avec de l'α,ω-bis-triméthylsiloxypolydiméthylsiloxane, des promoteurs d'adhérence, des solvants, des matières de charge, des pigments et avec des sels de métaux lourds ou des amines accélérant de manière connue la réticulation, caractérisées en ce qu'on utilise comme agent de réticulation 0,1 à 15 % en poids — par rapport au mélange total — d'une substance de formule générale :

$$R_W(RO)_ZSi[NR'''R'R_nSi(OR)_{3-n}]_{4-m}$$

dans laquelle

R est un radical alcoyle ayant 1 à 4 atomes de carbone,

R' un radical alcoylène ayant 1 à 6 atomes de carbone ou bien des unités de formule $-(CH_2)_3NH(CH_2)_2-$ ou $-(CH_2)_2NH(CH_2)_2NH(CH_2)_2$,

R''' un radical alcoyle ayant 1 à 4 atomes de carbone ou de l'hydrogène,

n est 0, 1 ou 2,

m est W + Z, cette somme pouvant s'élever à 0, 1, 2 ou 3,

ou leurs hydrolysats partiels.

2. Masses de moulage selon la revendication 1, caractérisées en ce que RO représente le groupe $C_2H_5O-$.

3. Masses de moulage selon la revendication 1, caractérisées en ce qu'on utilise du

$$CH_3(C_2H_5O)Si[NHCH_2CH_2CH_2Si(OC_2H_5)_3]_2$$

comme agent de réticulation.

4. Masses de moulage selon la revendication 1, caractérisées en ce qu'on utilise, en plus de l'agent de réticulation selon la revendication 1, une autre substance agissant comme agent de réticulation.